# EUROPEAN PATENT SPECIFICATION

(11) **EP 1 435 382 B1**
(45) Date of publication and mention of the grant of the patent: **12.04.2006**
(21) Application number: 03250002.7
(22) Date of filing: 02.01.2003
(51) Int. Cl.: C09J 7/04, C08K 5/00, C09J 107/00

(54) **Flame retardant pressure sensitive adhesive tape**
Flammhemmendes druckempfindliches Klebeband
Ruban adhésif ignifuge sensible à la pression

(43) Date of publication of application: 07.07.2004
(73) Proprietor: Teraoka Seisakusho Co., Ltd., Tokyo (JP)
(72) Inventor: Kawaguchi, Takeo, c/o Teraoka Seisakusho Co., Ltd., Tokyo (JP); Sato, Shinji, c/o Teraoka Seisakusho Co., Ltd., Tokyo (JP); Fukushima, Yuichi, c/o Teraoka Seisakusho Co., Ltd, Tokyo (JP)
(74) Representative: Bates, Philip Ian

(56) References cited:
- EP-A- 0 309 060
- DE-A- 4 209 210
- US-A- 3 586 652
- PATENT ABSTRACTS OF JAPAN vol. 1999, no. 09, 30 July 1999 (1999-07-30) & JP 11 116911 A (SLIONTEC CORP), 27 April 1999 (1999-04-27)

## Description

### BACKGROUND OF THE INVENTION

### 1. Field of the Invention

The present invention relates to an odorless flame retardant pressure-sensitive adhesive tape preferably with a cloth substrate, which can be used for electrical and electronic parts and electrical installation parts, does not discolor the adherend, and does not emit gases having an adverse effect on the environment, such as a halogen gas or a sulfurous acid gas, on incinerating the used and unnecessary tape.

### 2. Description of the Related Art

A pressure-sensitive adhesive tape with a cloth substrate, which has heretofore been used for electric and electronic parts, is widely used for binding and fixing an adherend having a complicated shape or for fixing a site of generating noises by making good use of flexibility and vibration absorptivity characteristic of the cloth substrate, needless to say about electrical insulating property and electric corrosion resistance. The pressure-sensitive adhesive tape for these uses is generally necessary to have flame retardancy in the level established by UL510FR. In the pressure-sensitive adhesive tape with a cloth substrate, the volume of the cloth as a burning source is large and the flame retardancy is inferior due to a large amount of air contained in fibers constituting the cloth. Therefore, the flame retardancy is imparted by blending a large amount of a halogen-containing flame retarder having a large flame retarding effect in combination with an antimony-base flame retardant aid in the pressure-sensitive adhesive or providing a flame retardant layer separately from the pressure-sensitive adhesive layer.

As the pressure-sensitive adhesive used here, a vulcanized rubber-base pressure-sensitive adhesive is widely used, because this adhesive has advantages in the initial adherence, good adhesion performance to various adherends, good electrical insulating property and the like and is imparted further with thermal property.

In recent years, the halogen-base flame retarder of generating a halogen gas upon the incineration, the antimony-base flame retardant aid containing lead and arsenic, and the like come under the objectives of regulation for the purpose of environmental protection. Furthermore, it is proceeding to include sulfur and thiuram used for the vulcanization of rubber which is the main component of the pressure-sensitive adhesive, in the materials to be regulated because not only these emit a sulfurous acid gas or a nitrogen oxide at the incineration but also these are a carcinogen. Therefore, the flame retardant pressure-sensitive adhesive tape with a cloth substrate, which uses these materials, is also pressed to cope with these regulations.

The flame retardant pressure-sensitive adhesive tape with a cloth substrate, which contains these materials, corrodes a metallic adherend or discolors an adherend composed of an organic fiber, such as paper or cloth, depending on the case or disadvantageously generates an offensive odor peculiar to the halogen-base flame retarder.

As alternative means for the halogen-base flame retarder having these problems, there are known the methods of blending a urea compound (see, Japanese Unexamined Patent Publication (Kokai) No. 2001-81419), an organic phosphorus compound (Kokai No. 2000-169811), red phosphorus (Kokai No. 8-193187), aluminum hydroxide (Japanese Patent Application No. 2000-314960) or magnesium hydroxide (Kokai No. 2001-2839) in the pressure-sensitive adhesive layer or the substrate layer of the pressure-sensitive adhesive tape. However, the fact is that no effective means is found for the pressure-sensitive adhesive tape with a cloth substrate.

In order to produce a flame retardant pressure-sensitive adhesive tape with a cloth substrate to have a flame retardant level according to UL510FR such that the continuos burning time is less than 60 seconds, a large amount of the above-described metal hydroxide must be added to the pressure-sensitive adhesive. This means is, however, disadvantageous in that the pressure-sensitive adhesive property can be hardly maintained and the contact adhesion to a cloth substrate is poor. The non-halogen organic flame retarder such as urea or melamine compound (e.g., melamine sulfate) has a problem of low moisture resistance or poor heat stability in addition to increase of the amount added or this retarder is watersoluble and therefore, may cause a problem of electric corrosion due to its ion elution accelerating activity. Thus, this is not a suitable material. The organic phosphorus compound has a problem such as generation of a phosphorus-base compound upon the incineration of pressure-sensitive adhesive tape or adverse effect on the environment at the waste treatment.

The pressure-sensitive adhesive used for the flame retardant pressure-sensitive adhesive tape with a cloth substrate is generally a rubber-base pressure-sensitive adhesive but this adhesive is inferior in the resistance against heat or solvent as compared with pressure-sensitive adhesives such as acrylic and silicone. In order to overcome this problem, a vulcanization reaction is widely performed using a vulcanizing agent such as sulfur, its compound, peroxide, oxime, phenolic resin or maleimide, a vulcanization accelerator such as thiuram or zinc oxide, and the like in combination. However, there is still a problem that this pressure-sensitive adhesive causes metal corrosion or discoloration, the usable time of blended materials is short, the vulcanization takes a long time or oxygen inhibition occurs at the vulcanization.

Furthermore, the sulfurous acid gas generated at the incineration of vulcanized pressure-sensitive adhesive gives a problem of adverse effect on the environment or the thiuram used as the vulcanization accelerator is an environmental pollutant and must be treated with the greatest care or may produce carcinogenic nitrosamine by the decomposition and is regulated by the PRTR law (in Japan).

In order to solve these problems, a rubber vulcanizing system using aminoalkylalkoxysilane has been proposed. As the technical publication regarding this system, there are known a paper reporting that a coupling agent having an amino group is effective for halogenated rubber [see, S. Yamashita, M. Shigaraki, M. Orita and R.G. Caoutch, Plast., 606, 126 (1986)], a paper reporting that the same coupling agent when heated is more effective for epoxidised rubber [see, M. Akiba and A.S. Hashim, Prog. Polym. Sci., 22, 475 (1997)], a paper reporting that a rubber not having a functional group or a double bond can be vulcanized with vinyl silane in the combination use system with a peroxide [see, M. Akiba and A.S. Hashim, Prog. Polym. Sci., 22, 475 (1997)], and the like.

On the other hand, with respect to natural rubber or the diene-base general purpose rubber such as SBR, means of binding a filler treated with a coupling agent containing sulfur to the rubber molecular chain in the process of normal sulfur vulcanization is described in the Introduction [Hiroshi Okamoto, Nippon Gum Kyokai Shi (Journal of Japan Rubber Society), 62, 819 (1989)] or the like, however, a technique of vulcanizing natural rubber with aminoalkylalkoxysilane itself is not reported.

Also, as a problem peculiar to the flame retardant pressure-sensitive adhesive tape with a cloth substrate, contact adhesion between the substrate and the pressure-sensitive adhesive is poor or the pressure-sensitive adhesive may undergo strike through at the coating. Depending on the case, electric corrosion or the like may occur due to the ionic sizing agent used at the time of weaving the cloth substrate.

The object of the present invention is to provide a flame retardant pressure-sensitive adhesive tape, which is odorless, does not corrode or discolor the adherend and, upon the incineration, does not release a halogen gas or a sulfurous acid gas having an adverse effect on the environment.

### SUMMARY OF THE INVENTION

As a result of extensive investigations to solve these problems, the present inventors have found that when a vulcanized natural rubber-base flame retardant pressure-sensitive adhesive, obtained by vulcanizing a natural rubber-base elastomer with a terminal amino group-containing aminoalkylalkoxysilane, and blending the natural rubber-base elastomer vulcanized with the aminoalkylalkoxysilane and an inorganic flame retarder preferably composed of the metal hydroxide and inorganic flame retardant aid, is coated on a substrate, an odorless and non-sulfur and non-halogen flame retardant pressure-sensitive adhesive tape even with an inflammable cloth substrate can be provided. The present invention has been accomplished based on this finding. The present invention includes the following inventions.
(1) A flame retardant pressure-sensitive adhesive tape, comprising a cloth substrate and a flame retardant pressure-sensitive adhesive layer on at least one main surface of said substrate, said flame retardant pressure-sensitive adhesive layer comprising a natural rubber-base elastomer composed of at least 50% by weight of natural rubber component, aminoalkylalkoxysilane as a vulcanizing agent, a tackifier resin and an inorganic flame retarder, said natural rubber elastomer being vulcanized with said aminoalkylalkoxysilane, said tape satisfying the flame retardant level established by UL510FR.
(2) The flame retardant pressure-sensitive adhesive tape as described in the above (1), wherein said flame retardant pressure-sensitive adhesive tape further comprises a flame retardant composition layer on a substrate side of said flame retardant pressure-sensitive adhesive layer, said flame retardant composition layer comprising a natural rubber-base elastomer composed of at least 50% by weight of natural rubber component, aminoalkylalkoxysilane as a vulcanizing agent, and an inorganic flame retarder, said natural rubber-base elastomer being vulcanized with said aminoalkylalkoxysilane, the content of said flame retarder in said flame retardant composition layer being greater than the content of said flame retarder in said flame retardant pressure-sensitive adhesive layer.
(3) The flame retardant pressure-sensitive adhesive tape as described in the above (1) or (2), wherein said cloth substrate is impregnated with said flame retardant pressure-sensitive adhesive layer or said flame retardant composition layer, by which said substrate is buried in said impregnated flame retardant pressure-sensitive adhesive layer or said flame retardant composition layer.
(4) The flame retardant pressure-sensitive adhesive tape as described in the above (1) to (3), wherein said substrate has a second surface on a side opposite to said flame retardant pressure-sensitive adhesive layer and said second surface of said substrate is coated with another flame retardant composition layer.
(5) The flame retardant pressure-sensitive adhesive tape as described in the above (1) to (4), wherein said flame retarder comprises a metal hydroxide and an inorganic flame retardant aid.
(6) The flame retardant pressure-sensitive adhesive tape as described in the above (1) to (5), wherein said flame retardant composition layer further comprises a tackifier resin and a weight ratio of said tackifier resin to said natural rubber-base elastomer in said flame retardant composition layer is greater than that of said flame retardant pressure-sensitive adhesive layer.
(7) The flame retardant pressure-sensitive adhesive tape as described in the above (1) to (6), wherein said substrate is an inflammable cloth.
(8) The flame retardant pressure-sensitive adhesive tape as described in the above (1) to (7), wherein in each of said flame retardant pressure-sensitive adhesive layer and/or said flame retardant composition layer, said aminoalkylalkoxysilane is contained in a ratio of 0.1 to 10 parts by weight per 100 parts by weight of the natural rubber-base elastomer.
(9) The flame retardant pressure-sensitive adhesive tape as described in the above (1) to (8), wherein in each of said flame retardant pressure-sensitive adhesive layer and/or said flame retardant composition, said inorganic flame retarder is from more than 150 to 800 parts by weight per 100 parts by weight of the natural rubber-base elastomer.
(10) The flame retardant pressure-sensitive adhesive tape as described in the above (1) to (9), wherein said flame retardant pressure-sensitive adhesive layer comprises a tackifier resin in an amount of 10 to 200 parts by weight per 100 parts by weight of said natural rubber-base elastomer in said pressure-sensitive adhesive layer, and said flame retardant composition layer comprises a tackifier resin in an amount of 10 to 200 parts by weight per 100 parts by weight of said natural rubber-base elastomer in said flame retardant composition layer, the blending ratio of the tackifier resin to the elastomer contained in said flame retardant composition layer being larger than the blending ratio of the tackifier resin to the elastomer contained in said flame retardant pressure-sensitive adhesive layer.
(11) The flame retardant pressure-sensitive adhesive tape as described in the above (2) to (10), wherein said flame retardant composition layer is formed by two or more flame retardant composition layers, and the blending ratio of the tackifier resin to the elastomer contained in said flame retardant composition layer in contact with said flame retardant pressure-sensitive adhesive layer is larger than the blending ratio of the tackifier resin to the elastomer contained in said flame retardant pressure-sensitive adhesive layer.
(12) The flame retardant pressure-sensitive adhesive tape as described in the above (1) to (11), wherein said flame retarder comprises aluminum hydroxide and/or magnesium hydroxide.
(13) The flame retardant pressure-sensitive adhesive tape as described in the above (1) to (12), wherein said flame retarder comprises at least one member selected from the group consisting of tin oxide, zinc metastannate, zinc hydroxystannate and zinc borate.
(14) The flame retardant pressure-sensitive adhesive tape as described in the above (1) to (13), wherein said aminoalkylalkoxysilane is selected from the group consisting of N-β(aminoethyl)γ-aminopropylmethyldimethoxysilane, N-β(aminoethyl)γ-aminopropylmethyldiethoxysilane, N-β(aminoethyl)γ-aminopropyltrimethoxysilane, N-β(aminoethyl)γ-aminopropyltriethoxysilane, γ-aminopropyltrimethoxysilane and γ-aminopropyltriethoxysilane.
(15) The flame retardant pressure-sensitive adhesive tape as described in the above (1) to (14), wherein said flame retardant pressure-sensitive adhesive layer and/or said flame retardant composition further comprise at least one component selected from the group consisting of an inorganic filler, an ultraviolet absorbent, an antioxidant and an oil.
(16) The flame retardant pressure-sensitive adhesive tape as described in the above (1) to (15), wherein the amount of said flame retardant composition layer is from 3 to 250 g/m².
(17) The flame retardant pressure-sensitive adhesive tape as described in the above (1) to (16), wherein the amount of said flame retardant pressure-sensitive adhesive layer is from 20 to 600 g/m².
(18) The flame retardant pressure-sensitive adhesive tape as described in the above (1) to (17), wherein said inflammable cloth is a single fabric or a union fabric woven from a single yarn or a blended yarn comprising a fiber selected from the group consisting of staple fiber, cotton, polyester, polyethylene, polypropylene and acrylic fiber, and having a size of 38 to 300 denier and the density of the fabric is from 25 to 450 yarns per inch in both the warp and the weft.
(19) The flame retardant pressure-sensitive adhesive tape as described in the above (1) to (18), wherein said flame retardant pressure-sensitive adhesive layer and/or said flame retardant composition layer contain essentially no sulfur and halogen.
(20) A flame retardant pressure-sensitive adhesive tape, comprising a cloth substrate having on at least one main surface thereof a flame retardant composition layer and a flame retardant pressure-sensitive adhesive layer in this order; said cloth substrate being impregnated and coated with said flame retardant composition layer; said flame retardant composition layer comprising a natural rubber-base elastomer composed of at least 50% by weight of natural rubber component, aminoalkylalkoxysilane, a tackifier resin and a flame retarder composed of a metal hydroxide and an inorganic flame retardant aid, said natural rubber-base elastomer being vulcanized with aminoalkylalkoxysilane, said aminoalkylalkoxysilane being blended in a ratio of 0.1 to 10 parts by weight per 100 parts by weight of the natural rubber-base elastomer; said flame retardant pressure-sensitive adhesive layer comprising a natural rubber-base elastomer composed of at least 50% by weight of natural rubber component, aminoalkylalkoxysilane, a tackifier resin and a flame retarder composed of a metal hydroxide and an inorganic flame retardant aid, said natural rubber-base elastomer being vulcanized with aminoalkylalkoxysilane, said minoalkylalkoxysilane being blended in a ratio of 0.1 to 10 parts by weight per 100 parts by weight of the natural rubber-base elastomer; and said tape satisfying the flame retardant level established by UL510FR.
(23) The flame retardant pressure-sensitive adhesive tape as described in the above (22), wherein in each of said flame retardant composition layer and/or said flame retardant pressure-sensitive adhesive layer, the ratio of said inorganic flame retardant aid blended with said metal hydroxide is from 10 to 50 parts by weight per 100 parts by weight of the metal hydroxide and the total amount of said metal hydroxide and said inorganic flame retardant aid is from more than 150 to 800 parts by weight per 100 parts by weight of the natural rubber-base elastomer in said layer or composition, said flame retardant pressure-sensitive adhesive tape containing essentially no sulfur, antimony, lead, arsenic, phosphorus and halogen.
(24) Use of the flame retardant pressure-sensitive adhesive tape as described in the above (1) to (23) for television parts or a deflection yoke coil.

### BRIEF DESCRIPTION OF THE DRAWINGS

Fig. 1 is a cross-sectional view of a flame retardant pressure-sensitive adhesive tape with a cloth substrate, comprising a flame retardant composition layer and a flame retardant pressure-sensitive adhesive layer.
Fig. 2 is a cross-sectional view of a flame retardant pressure-sensitive adhesive tape with a cloth substrate, comprising two flame retardant composition layers and a flame retardant pressure-sensitive adhesive layer.
Fig. 3 is a cross-sectional view of a flame retardant pressure-sensitive adhesive tape with a cloth substrate, comprising a flame retardant composition layer and a flame retardant pressure-sensitive adhesive layer on one side of the substrate and an additional flame retardant composition layer on the other side of the substrate.

### DESCRIPTION OF THE EMBODIMENTS OF THE INVENTION

To avoid use of a flame retarder containing halogen, antimony, lead or arsenic or the like which may generate odor or give a gas having an adverse effect to the environment, metal hydroxide is a candidate as an alternate flame retarder which does not have such adverse effects.

The metal hydroxide preferably used as a flame retarder in the odorless and non-halogen flame retardant pressure-sensitive adhesive tape, with an inflammable cloth substrate, undergoes a dehydration reaction by increase in the temperature upon firing and exhibits self-extinguishing property, but, because of the above-described reasons, its addition in a large amount to the pressure-sensitive adhesive layer for the pressure-sensitive adhesive tape has a problem of impairing the pressure-sensitive adhesive property. However, the present inventors have found that a natural rubber-base elastomer can be vulcanized with aminoalkylalkoxysilane and when a natural rubber-base elastomer vulcanized with aminoalkylalkoxysilane is used in a pressure-sensitive adhesive, excellent pressure-sensitive adhesive property is attained even if a large amount of inorganic retarder, for example, the metal hydroxide together with an inorganic flame retardant aid, is added to the pressure-sensitive adhesive layer.

Heretofore, it has not been known that a natural rubber-base elastomer, having no functional group, can be vulcanized with aminoalkylalkoxysilane, or that a pressure-sensitive adhesive or a resin composition using the natural rubber-base elastomer vulcanized with aminoalkylalkoxysilane exhibits an excellent property of holding a flame retarder even composed of a metal hydroxide and an inorganic flame retardant aid and also excellent contact adhesion to an adherend or a cloth substrate. In accordance with the present invention, even if an inorganic flame retarder is blended in a large amount to a pressure-sensitive adhesive layer or a resin composition, desired adhesion properties such as contact adhesion to an adherend or a cloth substrate and adhesive strength (peel adhesion) of the pressure-sensitive adhesive can be attained.

Aminoalkylalkoxysilane can vulcanize a natural rubber-base elastomer, which is preferable in the present invention since it does not need sulfur or a thiol group (-SH) for vulcanization.

The flame retardant pressure-sensitive adhesive in the pressure-sensitive adhesive tape of the present invention, may be obtained by blending components such as a tackifier resin, an oil, a filler, an antioxidant and a flame retarder composed of a metal hydroxide, a flame retardant aid and the like to a natural rubber-base elastomer vulcanized with aminoalkylalkoxysilane. The flame retardant pressure-sensitive adhesive in the pressure-sensitive adhesive tape of the present invention can be vulcanized with a low energy, is free from oxygen inhibition, is odorless and neither corrodes a metal as the adherend nor discolors paper, cloth or plastic.

In a preferred embodiment of the present invention, a flame retardant composition layer is provided on a substrate side of the flame retardant pressure-sensitive adhesive layer, i.e., between the flame retardant pressure-sensitive adhesive layer and the cloth substrate and optionally into or beyond the cloth substrate. This flame retardant composition layer comprises a natural rubber-base elastomer, aminoalkylalkoxysilane, a tackifier resin and an inorganic flame retarder, the natural rubber-base elastomer being vulcanized by the aminoalkylalkoxysilane. The content of the inorganic flame retarder in the flame retardant composition layer may preferably be greater than that of the flame retardant pressure-sensitive adhesive layer. By this construction, the amount of the flame retarder to be used in the pressure-sensitive adhesive layer, necessary for obtaining a flame retardant level of the tape satisfying the UL-510FR burning test standard, can be reduced, while the pressure-sensitive adhesive properties of the pressure-sensitive adhesive layer can be maintained to be high by incorporation of a relatively less amount of inorganic flame retarder in the flame retardant pressure-sensitive adhesive layer. Both excellent pressure-sensitive adhesive properties and high flame retardant level can be easily satisfied by the combination of the flame retardant pressure-sensitive adhesive layer and the flame retardant pressure-sensitive adhesive layer of this embodiment of the present invention. The flame retardant composition layer may comprise essentially the same composition as that of the flame retardant pressure-sensitive adhesive layer although the content of the flame retardant in the flame retardant composition layer may be advantageously made greater than that of the pressure-sensitive adhesive layer.

The flame retardant pressure-sensitive adhesive tape with a cloth substrate, which is obtained by forming a flame retardant pressure-sensitive adhesive layer optionally with a flame retardant composition layer on at least one surface of the substrate, has a flexibility and tackiness peculiar to the rubber-base pressure-sensitive adhesive and rubber-base resin, exhibits excellent resistance against electric corrosion, is odorless and, upon incineration of the pressure-sensitive adhesive tape, does not release a halogen gas or a sulfurous acid gas having an adverse effect on the environment. By using as the substrate a cloth, particularly an inflammable cloth such as a cotton cloth, the pressure-sensitive adhesive tape may have excellent flexibility inherent to the cloth.

In a preferred embodiment of the present invention, a cloth substrate is subjected to a flame retardation treatment of impregnating a natural rubber-base flame retardant pressure-sensitive adhesive or, when used, a natural rubber-base flame retardant composition, having blended therein a flame retarder, a tackifier and aminoalkylalkoxysilane. By this impregnation flame retardation treatment of the cloth substrate, the amount of the flame retarder to be used in the pressure-sensitive adhesive layer, necessary for obtaining a flame retardant level of the tape satisfying the UL-510FR burning test standard, can be also reduced. By the impregnating treatment, the sizing agent adhering to the cloth can be fixed due to the coating treatment and excellent electric corrosion resistance can be obtained even without a scouring treatment. Furthermore, since a flame retardant pressure-sensitive adhesive or a flame retardant composition is impregnated into (as a result, coating the entire or partial surface of) the cloth substrate, the flame retardant effect against burning is exerted also from the substrate side (exposed side) of the flame retardant tape.

In accordance with the present invention, it is generally possible that an additional flame retardant layer, preferably a flame retardant natural rubber-base composition having blended therein a flame retarder, a tackifier resin and aminoalkylalkoxysilane, is provided on a side of the substrate opposite to the pressure-sensitive adhesive layer, to improve the flame retardation property of the tape, particularly with an inflammable substrate, on an exposed surface side thereof. This flame retardation treatment may not be impregnation of a flame retardant adhesive or flame retardant composition into a cloth substrate, and may be coating of a flame retardant layer on a cloth substrate on the exposed surface side. Further, the composition of the flame retardant layer may be the same as or different from the composition of the flame retardant pressure-sensitive adhesive layer or the flame retardant composition layer.

The odorless and non-halogen flame retardant pressure-sensitive adhesive tape of the present invention is described below by referring to the drawings.

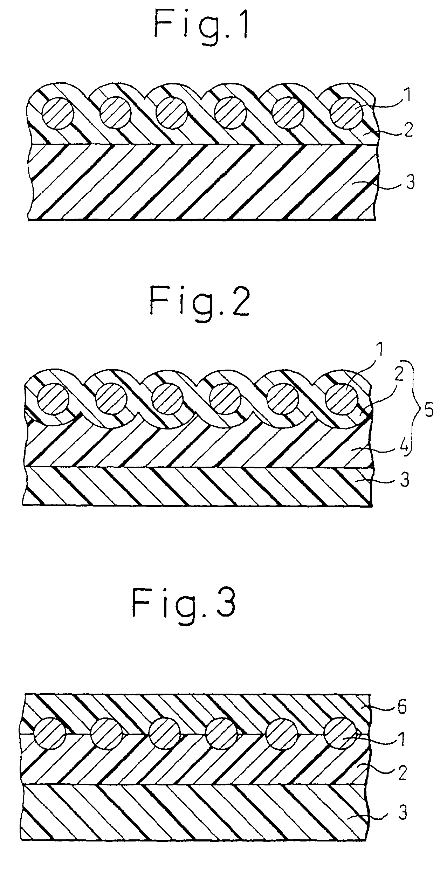

Fig. 1 is a cross-sectional view of a flame retardant pressure-sensitive adhesive tape with a cloth substrate, comprising a flame retardant composition layer and a flame retardant pressure-sensitive adhesive layer are provided. Fig. 2 is a cross-sectional view of a flame retardant pressure-sensitive adhesive tape with a cloth substrate, comprising two flame retardant composition layers and a flame retardant pressure-sensitive adhesive layer are provided.

In Figs. 1 and 2, the reference numeral 1 is, for example, an inflammable cloth, 2 is a natural rubber-base flame retardant composition layer comprising an inorganic flame retarder such as a metal hydroxide and an inorganic flame retardant aid as well as aminoalkylalkoxysilane, 3 is a natural rubber-base flame retardant pressure-sensitive adhesive layer, comprising a natural rubber-base elastomer vulcanized with aminoalkylalkoxysilane, an inorganic flame retarder such as a metal hydroxide and an inorganic flame retardant aid. The natural rubber-base flame retardant composition layer 2 is preferably impregnated, but not necessarily impregnated, into the cloth substrate 1 to cover preferably the entire surface of the cloth substrate 1 including the surface of the cloth substrate 1 opposite to the side of the natural rubber-base flame retardant pressure-sensitive adhesive layer 3. In Fig. 2, the reference numeral 4 is an additional vulcanized natural rubber-base flame retardant composition layer, used between the natural rubber-base flame retardant composition layer 2 and the vulcanized natural rubber-base flame retardant pressure-sensitive adhesive layer 3.

In a preferred embodiment of the present invention as shown in Figs. 1 and 2, it is intended that the content of the flame retarder in the natural rubber-base flame retardant composition layer 2, or the natural rubber-base flame retardant composition layer 4 when used, is higher than the content of the flame retarder in the natural rubber-base flame retardant pressure-sensitive adhesive layer 3.

In Fig. 3, the flame retardant pressure-sensitive adhesive tape comprises a natural rubber-base flame retardant composition layer 2 and natural rubber-base flame retardant pressure-sensitive adhesive layer 3 on a side of a cloth substrate 1, and an additional flame retardant layer 6, particularly a natural rubber-base flame retardant layer, on an opposite side of the cloth substrate. The additional flame retardant layer 6 preferably comprises a natural rubber-base elastomer vulcanized with aminoalkylalkoxysilane, a tackifier resin, and an inorganic flame retarder such as a metal hydroxide and an inorganic flame retardant aid, but is not limited thereto, and can be any one as far as it provides a flame retardant property to the exposed surface of the substrate.

In the rubber-base elastomer used for the natural rubber-base flame retardant composition layer and for the vulcanized natural rubber-base flame retardant pressure-sensitive adhesive layer, a natural rubber component preferably occupies at least 50% by weight or more, more preferably 60% or more, even to 100% by weight. As the elastomer other than the natural rubber, synthetic rubbers such as butyl rubber, isoprene rubber, butadiene rubber and acrylic rubber may be used individually or as a mixture of two or more thereof. It is preferred that a rubber component containing halogen is completely excluded. If the natural rubber component is less than 50%, the crosslinking density by vulcanization with the aminoalkylalkoxysilane is insufficient and this causes failure in having a sufficiently high holding power when heated. The natural rubber is advantageous in that upon the incineration, it does not release a halogen gas or the like having an adverse effect on the environment.

In the present invention, aminoalkylalkoxysilane is used as the vulcanizing agent of a natural rubber-base elastomer, so that unlike conventional sulfur-base vulcanizing agents, a sulfurous acid gas is not generated upon incineration. It is one of advantages of the present invention that a harmful vulcanizing agent such as sulfur needs not be substantially used.

Aminoalkylalkoxysilane not only acts as the vulcanizing agent of a natural rubber-base elastomer but also has a function of a coupling agent for an inorganic flame retardant and of a coupling agent to a cloth substrate or an adherend.

Preferred aminoalkylalkoxysilanes are N-β(aminoethyl)γ-aminopropylmethyldimethoxysilane, N-β(aminoethyl)γ-aminopropylmethyldiethoxysilane, N-β(aminoethyl)γ-aminopropyltrimethoxysilane, N-β(aminoethyl)γ-aminopropyltriethoxysilane, γ-aminopropyltrimethoxysilane and γ-aminopropyltriethoxysilane, having the following structural formulae:
H₂N-C₂H₄-NH-C₃H₆-SiCH₃ (OCH₃)₂
H₂N-C₂H₄-NH-C₃H₆-SiCH₃ (OC₂H₅)₂
H₂N-C₂H₄-NH-C₃H₆-Si(OCH₃)₃
H₂N-C₂H₄-NH-C₃H₆-Si(OC₂H₅)₃
H₂N-C₃H₆-Si(OCH₃)₃
H₂N-C₃H₆-Si(OC₂H₅)₃

The amount of the aminoalkylalkoxysilane added is preferably from 0.1 to 10 parts by weight per 100 parts by weight of the natural rubber-base elastomer. If the amount added is less than 0.1 part by weight, vulcanization incompletely proceeds, as a result, the film strength of the vulcanized natural rubber-base composition layer or flame retardant pressure-sensitive adhesive layer formed on or impregnating into the substrate is not sufficiently high, the contact adhesion to the substrate is poor, and the holding power when heated is insufficient due to the incomplete vulcanization.

The amount of the aminoalkylalkoxysilane used in the present invention is generally greater than the amount of a vulcanizing agent used in the corresponding prior art composition.

If the amount of the aminoalkylalkoxysilane added exceeds 10 parts by weight, in the case of the natural rubber-base flame retardant composition layer, there arises a problem that the film after vulcanization becomes excessively hard to lose the feeling of cloth, and in the case of the vulcanized natural rubber-base flame retardant pressure-sensitive adhesive layer, there arises a problem that the adhesive strength decreases in a normal state or with the passage of time due to over-vulcanization.

The flame retarder preferably comprises a metal hydroxide and an inorganic flame retardant aid, but is not limited thereto, and, for example, only one of the metal hydroxide and inorganic flame retardant aid may be used, depending on the other factors such as the type of the substrate and the composition of the flame retardant composition and the flame retardant pressure-sensitive adhesive layer.

The amount of the flame retarder is preferably from more than 150 to 800 parts by weight, more preferably 300 to 800 part by weight per 100 parts by weight of the natural rubber-base elastomer of the tape.

The blending ratio of the metal hydroxide and inorganic flame retardant aid when added is preferably such that the flame retardant aid is from 10 to 50 parts by weight per 100 parts by weight of the metal hydroxide. If the flame retardant aid is less than 10 parts by weight, the flame retarding effect by the metal hydroxide decreases, whereas if it exceeds 50 weight parts, the effect by the addition of the flame retardant aid is not exerted.

The amount of the flame retarder comprising a mixture of a metal hydroxide and a flame retardant aid, added to the natural rubber-base elastomer is suitably from more than 150 to 800 parts by weight per 100 parts by weight of the natural rubber-base elastomer. If the amount of the flame retarder added is not more than 150 parts by weight, the flame retardant level based on the UL-510FR burning test is difficult to obtain, whereas if it exceeds 800 parts by weight, the natural rubber-base flame retardant composition layer and the vulcanized natural rubber-base flame retardant pressure-sensitive adhesive layer both are abruptly increased in the viscosity and not only these blends can hardly be coated but also even if coated, there arise a problem such that the contact adhesion to cloth may decrease or the pressure-sensitive adhesive readily undergo interfacial failure.

The vulcanized natural rubber-base flame retardant pressure-sensitive adhesive layer may contain a tackifier resin. The amount of the tackifier resin is suitably from 10 to 200, preferably 40 to 150 parts by weight per 100 parts by weight of the natural rubber-base elastomer. If the amount of the tackifier resin added is less than 10 parts by weight, the pressure-sensitive adhesion and the tack are unbalanced and the tackiness is lost, whereas if it exceeds 200 parts by weight, the viscosity as a pressure-sensitive adhesive is lacking and a satisfactory adhesive property cannot be exerted.

The natural rubber-base flame retardant composition layer may contain a tackifier resin. The amount of the tackifier resin is preferably from 10 to 200 parts by weight, more preferably from 40 to 150 parts by weight, per 100 parts by weight of the natural rubber-base elastomer. If the amount of the tackifier resin added is less than 10 parts by weight, the tack property of the layer coated and impregnated into the cloth is excessively small and the unwinding of the pressure-sensitive adhesive tape may fail, whereas if it exceeds 200 parts by weight, the natural rubber-base flame retardant composition layer becomes fragile and cannot maintain a sufficiently high film strength.

In a preferred embodiment of the present invention, the ratio of the tackifier resin to the natural rubber-base elastomer in the flame retardant composition layer is higher than the ratio of the tackifier resin to the natural rubber-base elastomer in the pressure-sensitive adhesive layer. If these ratios are reversed, the pressure-sensitive adhesive layer coated on the outer side may decrease in the pressure-sensitive adhesive property upon aging by migration of the tackifier resin from the pressure-sensitive adhesive layer to the flame retardant composition layer of the inner side thereof, while it depends on the composition of the pressure-sensitive adhesive layer. In the above structure of the tape, even if a large amount of an inorganic flame retarder is blended in the pressure-sensitive adhesive layer coming into contact with an adherend, the pressure-sensitive adhesive property can be prevented from deteriorating.

The flame retardant composition layer may be composed of two or more layers. For example, a flame retardant composition layer in contact with the cloth substrate may be adjusted to have an adequate composition to attain both flame retardation and adhesion to the cloth substrate. Another flame retardant composition layer in contact with the pressure-sensitive adhesive layer may be adjusted to have an adequate composition to attain a maximum flame retardation with less consideration of adhesion property to the cloth substrate.

As the metal hydroxide for use in the flame retardant pressure-sensitive adhesive tape of the present invention, aluminum hydroxide and magnesium hydroxide are preferred and these may be used individually or in combination.

The flame retardant aid for use in the flame retardant pressure-sensitive adhesive tape of the present invention preferably does not generate a halogen gas upon incineration and is odorless and although not particularly limited, at least one member selected from the group consisting of tin oxide, zinc metastannate, zinc hydroxystannate and zinc borate is preferably used.

In the natural rubber-base flame retardant composition layer and the vulcanized natural rubber-base flame retardant pressure-sensitive adhesive layer, preferably, an inorganic filler, an ultraviolet absorbent-containing antioxidant and an oil are added so as to adjust the film strength and the pressure-sensitive adhesive property.

The amount of the natural rubber-base flame retardant composition layer when coated on or impregnated into and adhering to the cloth substrate, particularly an inflammable cloth, is suitably from 3 to 250 g/m². If the amount of the layer is less than 3 g/m², an advantage of satisfying the flame retardant level under the UL510FR burning test standard is not easily obtained, whereas if it exceeds 250 g/m², the substrate disadvantageously loses the flexibility.

The amount of the vulcanized natural rubber-base flame retardant pressure-sensitive adhesive layer is preferably from 20 to 600 g/m², more preferably 20 to 250 g/m². If the coated amount is less than 20 g/m², a pressure-sensitive adhesive property of adhering to a complicated shape is difficult to be obtained, whereas if it exceeds 600 g/m², appearance defects as a pressure-sensitive adhesive tape, such as oozing, and cost increase are incurred and this is not practical.

The cloth substrate used in the flame retardant pressure-sensitive adhesive tape of the present invention is not particularly limited and may not be an inflammable cloth such as a cotton cloth, but also a cloth made of a flame retardant material such as polyimido resin or glass. However, an inflammable cloth is advantageous since it has an excellent flexibility and is cheap.

The inflammable cloth preferably used for the flame retardant pressure-sensitive adhesive tape of the present invention may be a single or union fabric woven from a single yarn such as staple fiber, cotton, polyester, polyethylene, polypropylene and acrylic fiber or a blended yarn thereof, having a size of 38 to 300 denier for both the warp and the weft. If the size is less than 38 denier, the cloth is too thick as the substrate of the pressure-sensitive adhesive tape and is disadvantageously too large in the flexibility and the absolute amount of resin, whereas if it exceeds 300 denier, the strength of the cloth is insufficient.

The density of the cloth is suitably from 25 to 450 yarns per inch in both the warp and the weft. If the density is less than 25 yarns per inch, the substrate strength is insufficient, whereas if it exceeds 450 yarns per inch, the flame retardant composition adheres in an excessively large amount in the flame retardation treatment and the substrate becomes too high in the nerve and loses its peculiar feeling.

A flame retardant pressure-sensitive tape with a substrate, wherein a vulcanized natural rubber-base flame retardant pressure-sensitive adhesive is coated on the substrate, can be produced, for example, as follows. A masticated natural rubber and other synthetic rubber are dissolved in a solvent such as toluene to have an appropriate plasticity. Thereto, an inorganic flame retarder such as a mixed flame retarder composed of a metal hydroxide and a flame retardant aid, a tackifier resin, an inorganic filler and an antioxidant are added and dispersed. Thereafter, aminoalkylalkoxysilane is added and stirred to prepare a natural rubber-base flame retardant composition. This composition is coated and impregnated in a predetermined amount into the above-described inflammable cloth by a reverse coater or the like to prepare a flame retardation treated cloth substrate. On this substrate, a natural rubber-base flame retardant pressure-sensitive adhesive solution prepared in the same manner as the above-described natural rubber-base flame retardant composition is coated by a roll coater and dried, thereby completing the vulcanization reaction. Thereafter, only by taking it up, the pressure-sensitive adhesive tape of the present invention can be obtained.

The flame retardant pressure-sensitive adhesive tape of the present invention is particularly useful for fixing a large electric current heat-generating part such as television part, in which a large electric current passes and may increase in temperature and, therefore, flame retarding property is important.

The present invention provides a pressure-sensitive adhesive tape comprising a cloth substrate and a vulcanized natural rubber-base flame retardant pressure-sensitive adhesive layer obtained by vulcanizing a natural rubber-base elastomer with aminoalkylalkoxysilane, and blending the inorganic flame retarder such as the above-described metal hydroxide-base flame retarder and a tackifier resin. The cloth substrate is preferably impregnated with a natural rubber-base flame retardant composition having blended therein a metal hydroxide-base flame retarder and aminoalkylalkoxysilane. The pressure-sensitive adhesive tape of the present invention preferably uses a metal hydroxide-base flame retarder and aminoalkylalkoxysilane, which are safe to a human body and have no adverse effect on the environment, and therefore, can be vulcanized with a low energy, is free from oxygen inhibition, neither corrodes a metal as the adherend nor discolors paper, cloth or plastic, and is odorless. Furthermore, the pressure-sensitive adhesive tape of the present invention is advantageous in that upon incineration, it does not release a halogen gas, a sulfurous acid gas or a nitrogen oxide having an adverse effect on the environment.

### EXAMPLES

The present invention is described in greater detail below by referring to Examples, however, the present invention is not limited to these Examples. In Examples, the "parts" is parts by weight and "%" is % by weight.
(1) Preparation of Natural rubber-base Flame Retardant Composition Solution:
   As the rubber-base composition coated and impregnated into an inflammable cloth, a 34% solution of a natural rubber-base flame retardant composition was prepared by dissolving 100 parts by weight of a rubber elastomer composed of 65 parts of natural rubber adjusted to a plasticity of 76 and 35 parts of SBR, 350 parts of magnesium hydroxide (FINEMAG SN-T, produced by Air Water), 50 parts of zinc stannate (FLAMTARD H, produced by Nippon Light Metal Co., Ltd.), 5 parts of aminoalkylalkoxysilane, 120 parts of a tackifier resin (ESCOREZ 1304, produced by Exxon Chemicals) and 1 part of an antioxidant (NS-6, produced by Ouchi Shinko Chemical Industrial), in 1,200 parts of toluene.
(2) Preparation of Rubber-Base Flame Retardant Pressure-Sensitive Adhesive Solution:
   As the rubber-base flame retardant pressure-sensitive adhesive, a 50% solution of a rubber-base flame retardant pressure-sensitive adhesive was prepared by dissolving 100 parts of a rubber elastomer composed of 70 parts of natural rubber adjusted to a plasticity of 35 and 30 parts of SBR, 150 parts of magnesium hydroxide, 50 parts of zinc stannate, 1 part of aminoalkylalkoxysilane, 70 parts of a tackifier resin (ESCOREZ 1304, produced by Exxon Chemicals), 10 parts of titanium oxide and 1 part of an antioxidant (NS-6), in 382 parts of toluene.

### EXAMPLE 1

Preparation of Pressure-Sensitive Adhesive Tape with Vulcanized Natural rubber-base Flame Retardant Cloth Substrate:

On and into a tape substrate composed of a scoured inflammable acetate cloth having a warp of 75 denier in a density of 180 yarns/inch and a weft of 150 denier in a density of 53 yarns/inch, the rubber-base flame retardant solution prepared in the step (1) above was coated and impregnated by a reverse kiss coater to have a coated amount of 15.5 g/m² after drying, and then dried at 80°C for 1 minute and thereafter, the tape was taken up.

A flame retarder composition was prepared by using the pressure-sensitive adhesive prepared in the step (2) above, wherein in the blending thereof, magnesium hydroxide was increased from 150 parts to 400 parts, zinc stannate was increased from 50 parts to 175 parts, aminoalkylalkoxysilane was increased from 1 part to 7 parts, and the tackifier resin (ESCOREZ 1304) was increased from 70 parts to 120 parts. A 50% toluene solution of the above flame retarder composition solution was coated on the flame-retardation-treated acetate cloth tape substrate prepared above to have a coated amount of 150 g/m² after drying, and then dried.

Subsequently, a 50% flame retardant pressure-sensitive adhesive solution prepared in the step (2) above was coated to have a coated amount of 50 g/m² after drying, and then dried to obtain a pressure-sensitive adhesive tape with a vulcanized rubber-base flame retardant cloth substrate.

This roll was cut to a width of 12 mm and then subjected to measurements of thickness, tensile strength, elongation, peel adhesion, peel adhesion after heating, unwinding force, tack, holding power, coefficient of electrolytic corrosion, and dielectric breakdown voltage, and also to a burning test and an odor test. The evaluation results were satisfied in all items of pressure-sensitive adhesive properties, electrical properties, flame retardancy and odor.

The results are shown in Table 1. As seen from these results, the peel adhesion and the tack are particularly good.

### EXAMPLE 2

Preparation of Pressure-Sensitive Adhesive Tape with Vulcanized Natural rubber-base Flame Retardant Cloth Substrate:

On and into a tape substrate composed of the same inflammable acetate cloth as used in Example 1 which was, however, not scoured, the solution prepared in the step (1) above was coated and impregnated to have a coated amount of 18.5 g/m² after drying and then dried to prepare a flame retardation-treated acetate cloth tape substrate.

Subsequently, a flame retarder composition was prepared by using the rubber-base flame retardant pressure-sensitive adhesive prepared in the step (2) above, in which in the blending thereof, magnesium hydroxide was changed to 400 parts, zinc stannate was changed to 200 parts, aminosilane was changed to 7 parts and the tackifier resin (ESCOREZ 1304) was changed to 120 parts. A 50% toluene solution of the above flame retarder composition was coated on the flame retardation-treated acetate cloth tape substrate prepared above to have a coated amount of 150 g/m² after drying.

Thereon, the 50% rubber-base flame retardant pressure-sensitive adhesive solution prepared in the step (2) above was coated to have a coated amount of 50 g/m² after drying and then dried to obtain a pressure-sensitive adhesive tape comprising a vulcanized rubber-base flame retardant cloth substrate, an addstional flame retardant composition layer and a flame retardant pressure-sensitive adhesive layer.

This tape roll was cut to a width of 12 mm and evaluated on the same items as in Example 1. The results are shown in Table 1. As seen from these results, even when a non-scoured acetate cloth was used, good results were obtained in the coefficient of electrolytic corrosion and the like.

### EXAMPLE 3

On and into the same non-scoured inflammable acetate cloth tape substrate as used in Example 2, the solution prepared in the step (1) above was coated and impregnated to have a coated amount of 15.5 g/m² after drying and then dried to prepare a flame retardation-treated acetate cloth tape substrate.

Subsequently, a flame retarder composition was prepared by using the rubber-base flame retardant pressure-sensitive adhesive as prepared in the (2) above, in which in the blending thereof, however, magnesium hydroxide was changed to 400 parts, zinc stannate was changed to 200 parts, amincalkylalkoxysilane was changed to 7 parts and the tackifier resin (ESCOREZ 1304) was changed to 120 parts. A 50% toluene solution of the above flame retarder composition was coated on the flame retardation-treated acetate cloth tape substrate to have a coated amount of 150 g/m² after drying.

Thereon, the 50% rubber-base flame retardant pressure-sensitive adhesive solution prepared in the step (2) above was coated to have a coated amount of 50 g/m² after drying and then dried to obtain a pressure-sensitive adhesive tape comprising a vulcanized rubber-base flame retardant cloth substrate, an additional flame retardant composition layer and a flame retardant pressure-sensitive adhesive layer.

This tape roll was cut to a width of 12 mm and evaluated on the same items as in Example 1. The results are shown in Table 1. As seen from these results, even when a non-scoured acetate cloth was used, good results were obtained in the coefficient of electrolytic corrosion.

### COMPARATIVE EXAMPLE 1

On a tape substrate composed of the same acetate cloth as used in Example 1, the rubber-base flame retardant pressure-sensitive adhesive solution prepared in the step (2) above was directly coated by a roll coater to have a coated amount of 200 g/m² after drying and then dried at 80°C for 2 minutes to obtain a 30 m-roll product. This roll was cut to a width of 12 mm and evaluated on the same items as in Example 1. The results are shown in Table 1. As seen from these results, the evaluation in the UL510FR burning test was rejection and this is presumed ascribable to the fact that the inflammable cloth was exposed.

### COMPARATIVE EXAMPLE 2

On and into the tape substrate composed of an inflammable acetate cloth of Example 1, a rubber-base flame retardant solution obtained by excluding 5 parts of amincalkylalkoxysilane from the blending of the rubber-base composition prepared in the step (1) was coated and impregnated to have a coated amount of 15.5 g/m² after drying and then dried, and the tape substrate was taken up.

On this flame retardation-treated acetate cloth tape substrate, a rubber-base flame retardant pressure-sensitive adhesive solution obtained by excluding 1 part of aminoalkylalkoxysilane from the blending of the rubber-base flame retardant pressure sensitive adhesive prepared in the step (2) was coated by a roll coater to have a coated amount of 200 g/m² after drying and then dried at 80°C for 2 minutes to obtain a 30 m-roll product.

This roll was cut to a width of 12 mm and evaluated on the same items as in Example 1. The results are shown in Table 1. As seen from these results, the holding power was poor and this reveals the vulcanization effect by aminoalkylalkoxysilane.

### COMPARATIVE EXAMPLE 3

On a tape substrate composed of the same acetate cloth as in Example 1, a flame retardant layer comprising chloroprene rubber/antimony trioxide was coated by a gravure coater to have a coated amount of 92 g/m² after drying and then dried.

Thereon, a pressure-sensitive adhesive comprising natural rubber vulcanized with phenol resin, a tackifier resin and calcium carbonate was coated by a roll coater to have a coated amount of 58 g/m² after drying and dried and the tape was taken up.

This tape was evaluated on the same items as in Example 1. The results are shown in Table 1. As seen from these results, despite excellent flame retardancy, the odor was severely offensive and this reveals it disadvantageous to use a halogen-base flame retarder.

**TABLE 1**

| Items Items | Examples | | | Comparative Examples | | |
|---|---|---|---|---|---|---|
| | 1 | 2 | 3 | 1 | 2 | 3 |
| Tape stiffness (g/cm)¹⁾ | 22.9 | 23.5 | 22.4 | 21.8 | 22.5 | 22.5 |
| Amount impregnated into cloth substrate (g/m²) | 15.5 | 18.5 | 15.5 | 0 | 15.5 | 0 |
| Amount of pressure-sensitive adhesive coated (g/m²) | 200 | 200 | 200 | 200 | 200 | 147 |
| Thickness (mm) | 0.23 | 0.24 | 0.25 | 0.22 | 0.24 | 0.26 |
| Tensile strength (Kg/12 mm)²⁾ | 7.9 | 8.3 | 8.1 | 7.4 | 7.9 | 7.9 |
| Elongation (%)³⁾ | 25.1 | 23.8 | 24.3 | 26.3 | 24.5 | 24.2 |
| Peel adhesion (N/12 mm)⁴⁾ | 6.0 | 6.1 | 5.2 | 5.8 | 7.4 | 3.1 |
| Peel adhesion after heating (N/12 mm)⁵⁾ | 13.8 | 16.1 | 12.1 | 13.2 | 10.2 | 8.8 |
| Unwinding force (N/12 mm)⁶⁾ | 2.4 | 2.4 | 2.8 | 3.4 | 3.6 | 6.8 |
| Tack⁷⁾ | 8 | 8 | 11 | 7 | 7 | 15 |
| Holding power (slippage: mm)⁸⁾ | 0.3 | 0.1 | 0.3 | 0.7 | dropped in 3 min | 1.3 |
| Coefficient of electrolytic corrosion⁹⁾ | 1.0 | 0.92 | 0.98 | 0.43 | 0.90 | 0.85 |
| Dielectric breakdown voltage (KV)¹⁰⁾ | 3.0 | 3.2 | 3.5 | 2.4 | 2.1 | 2.0 |
| UL510FR burning test (longest time) Judgement¹¹⁾ | 34 sec passed | 43 sec passed | 27 sec passed | 1 min and 5 sec Rejected | 52 sec passed | 10 sec passed |
| Odor¹²⁾ | 160 | 170 | 170 | 165 | 179 | 750 |
| Oxygen Index¹³⁾ | 22.8 | 23.2 | 24.2 | 21.8 | 24.0 | 28.2 |

| | | | | | | |
|---|---|---|---|---|---|---|
| Test Method | | | | | | |
| 1) Stiffness: Measured using stiffness tester (36 mm (width)·15° (angle)·10 g) | | | | | | |
| 2) Tensile strength: JIS C-2107-1999 | | | | | | |
| 3) Elongation: JIS C-2107-1999 | | | | | | |
| 4) Peel adhesion: JIS C-2107-1999 | | | | | | |
| 5) Peel adhesion after heating: JIS C-2107-1999 (120°Cx2H) | | | | | | |
| 6) Unwinding force: JIS Z-0237-2000 | | | | | | |
| 7) Tack: JIS Z-0237-2000 (angle: 10°) | | | | | | |
| 8) Holding power: JIS C-2107-1999(120°C × 30 min·12 mm × 25 mm·100 g) | | | | | | |
| 9) Coefficient of electrolytic corrosion: JIS C-2107-1999 | | | | | | |
| 10) Dielectric breakdown voltage: JIS C-2107-1999 | | | | | | |
| 11) UL510FR burning test: In a firing test repeated 5 times, an extinguishing time of 60 seconds or less per once was passed. | | | | | | |
| 12) Odor: Measured using an odor sensor (for general, manufactured by Shin Cosmos Denki) | | | | | | |
| 13) Oxygen index: JIS K-7201-1972 | | | | | | |

As described in the foregoing pates, the flame retardant pressure-sensitive adhesive tape with a cloth substrate using a natural rubber vulcanized with aminoalkylalkoxysilane and a metal hydroxide-base flame retarder according to the constitution of the present invention is advantageous, needless to say about electrical insulating property and flexibility, in that it does not yellow a metal adherend or an adherend such as cloth and paper and at the incineration, does not emit a halogen gas or a sulfurous acid gas.

### EXAMPLE 4

Preparation of Pressure-Sensitive Adhesive Tape with Vulcanized Natural rubber-base Flame Retardant Cloth Substrate:

On and into a tape substrate composed of a scoured inflammable acetate cloth having a warp of 75 denier in a density of 180 yarns/inch and a weft of 150 denier in a density of 53 yarns/inch, the rubber-base flame retardant solution prepared in the step (1) above was coated and impregnated by a reverse kiss coater to have a coated amount of 15.5 g/m² after drying, and then dried at 80°C for 1 minute and thereafter, the tape substrate was taken up.

On this tape substrate composed of the flame retardation-treated acetate cloth, the rubber-base flame retardant pressure-sensitive adhesive solution prepared in the step (2) above was coated by a roll coater to have coated amount of 200 g/m² after drying and then dried at 80°C for 2 minutes to obtain a 30 m-roll product. This roll was cut to a width of 12 mm and then subjected to measurements of thickness, tensile strength, elongation, peel adhesion, peel adhesion after heating, unwinding force, tack, holding power, coefficient of electrolytic corrosion, and dielectric breakdown voltage, and also to a burning test and an odor test. The evaluation results were satisfied in all items of pressure-sensitive adhesive properties, electrical properties, flame retardancy and odor.

### EXAMPLE 5

Preparation of Pressure-Sensitive Adhesive Tape with Vulcanized Natural rubber-base Flame Retardant Cloth Substrate:

On and into a tape substrate composed of the same inflammable acetate cloth as used in Example 4 which was, however, not scoured, the solution prepared in the step (1) above was coated and impregnated to have a coated amount of 18.5 g/m² after drying and then dried to prepare a tape substrate composed of flame retardation-treated acetate cloth. Subsequently, the rubber-base flame retardant pressure-sensitive adhesive solution prepared in the step (2) above was coated by a roll coater to have a coated amount of 200 g/m² after drying and then dried at 80°C for 2 minutes to obtain a 30 m-roll product. This roll was cut to a width of 12 mm and evaluated on the same items as in Example 1. Also when a non-scoured acetate cloth was used, good results were obtained in the coefficient of electrolytic corrosion and the like.

## Claims

1. A flame retardant pressure-sensitive adhesive tape, comprising a cloth substrate and a flame retardant pressure-sensitive adhesive layer on at least one main surface of said substrate, said flame retardant pressure-sensitive adhesive layer comprising a natural rubber-base elastomer composed of at least 50% by weight of natural rubber component, aminoalkylalkoxysilane as a vulcanizing agent, a tackifier resin and an inorganic flame retarder, said natural rubber elastomer being vulcanized with said aminoalkylalkoxysilane, said tape satisfying the flame retardant level established by UL510FR.

2. The flame retardant pressure-sensitive adhesive tape as claimed in claim 1, wherein said flame retardant pressure-sensitive adhesive tape further comprises a flame retardant composition layer on a substrate side of said flame retardant pressure-sensitive adhesive layer, said flame retardant composition layer comprising a natural rubber-base elastomer composed of at least 50% by weight of natural rubber component, aminoalkylalkoxysilane as a vulcanizing agent, and an inorganic flame retarder, said natural rubber-base elastomer being vulcanized with said aminoalkylalkoxysilane, the content of said flame retarder in said flame retardant composition layer being greater than the content of said flame retarder in said flame retardant pressure-sensitive adhesive layer.

3. The flame retardant pressure-sensitive adhesive tape as claimed in claim 1 or 2, wherein said cloth substrate is impregnated with said flame retardant pressure-sensitive adhesive layer or said flame retardant composition layer, by which said substrate is buried in said impregnated flame retardant pressure-sensitive adhesive layer or said flame retardant composition layer.

4. The flame retardant pressure-sensitive adhesive tape as claimed in claim 1, 2 or 3, wherein said substrate has a second surface on a side opposite to said flame retardant pressure-sensitive adhesive layer and said second surface of said substrate is coated with another flame retardant composition layer.

5. The flame retardant pressure-sensitive adhesive tape as claimed in any one of claims 1 to 4, wherein said flame retarder comprises a metal hydroxide and an inorganic flame retardant aid.

6. The flame retardant pressure-sensitive adhesive tape as claimed in any one of claims 1 to 5, wherein said flame retardant composition layer further comprises a tackifier resin and a weight ratio of said tackifier resin to said natural rubber-base elastomer in said flame retardant composition layer is greater than that of said flame retardant pressure-sensitive adhesive layer.

7. The flame retardant pressure-sensitive adhesive tape as claimed in any one of claims 1 to 6, wherein said substrate is an inflammable cloth.

8. The flame retardant pressure-sensitive adhesive tape as claimed in any one of claims 1 to 7, wherein in each of said flame retardant pressure-sensitive adhesive layer and/or said flame retardant composition layer, said aminoalkylalkoxysilane is contained in a ratio of 0.1 to 10 parts by weight per 100 parts by weight of the natural rubber-base elastomer.

9. The flame retardant pressure-sensitive adhesive tape as claimed in any one of claims 1 to 8, wherein in each of said flame retardant pressure-sensitive adhesive layer and/or said flame retardant composition, said inorganic flame retarder is from more than 150 to 800 parts by weight per 100 parts by weight of the natural rubber-base elastomer.

10. The flame retardant pressure-sensitive adhesive tape as claimed in any one of claims 1 to 9, wherein said flame retardant pressure-sensitive adhesive layer comprises a tackifier resin in an amount of 10 to 200 parts by weight per 100 parts by weight of said natural rubber-base elastomer in said pressure-sensitive adhesive layer, and said flame retardant composition layer comprises a tackifier resin in an amount of 10 to 200 parts by weight per 100 parts by weight of said natural rubber-base elastomer in said flame retardant composition layer, the blending ratio of the tackifier resin to the elastomer contained in said flame retardant composition layer being larger than the blending ratio of the tackifier resin to the elastomer contained in said flame retardant pressure-sensitive adhesive layer.

11. The flame retardant pressure-sensitive adhesive tape as claimed in any one of claims 2 to 10, wherein said flame retardant composition layer is formed by two or more flame retardant composition layers, and the blending ratio of the tackifier resin to the elastomer contained in said flame retardant composition layer in contact with said flame retardant pressure-sensitive adhesive layer is larger than the blending ratio of the tackifier resin to the elastomer contained in said flame retardant pressure-sensitive adhesive layer.

12. The flame retardant pressure-sensitive adhesive tape as claimed in any one of claims 1 to 11, wherein said flame retarder comprises aluminum hydroxide and/or magnesium hydroxide.

13. The flame retardant pressure-sensitive adhesive tape as claimed in any one of claims 1 to 12, wherein said flame retarder comprises at least one member selected from the group consisting of tin oxide, zinc metastannate, zinc hydroxystannate and zinc borate.

14. The flame retardant pressure-sensitive adhesive tape as claimed in any one of claims 1 to 13, wherein said aminoalkylalkoxysilane is selected from the group consisting of N-β(aminoethyl)γ-aminopropylmethyldimethoxysilane, N-β(aminoethyl)γ-aminopropylmethyldiethoxysilane, N-β(aminoethyl)γ-aminopropyltrimethoxysilane, N-β(aminoethyl)γ-aminopropyltriethoxysilane, γ-aminopropyltrimethoxysilane and γ-aminopropyltriethoxysilane.

15. The flame retardant pressure-sensitive adhesive tape as claimed in any one of claims 1 to 14, wherein said flame retardant pressure-sensitive adhesive layer and/or said flame retardant composition further comprise at least one component selected from the group consisting of an inorganic filler, an ultraviolet absorbent, an antioxidant and an oil.

16. The flame retardant pressure-sensitive adhesive tape as claimed in any one of claims 1 to 15, wherein the amount of said flame retardant composition layer is from 3 to 250 g/m².

17. The flame retardant pressure-sensitive adhesive tape as claimed in any one of claims 1 to 16, wherein the amount of said flame retardant pressure-sensitive adhesive layer is from 20 to 600 g/m².

18. The flame retardant pressure-sensitive adhesive tape as claimed in any one of claims 1 to 17, wherein said inflammable cloth is a single fabric or a union fabric woven from a single yarn or a blended yarn comprising a fiber selected from the group consisting of staple fiber, cotton, polyester, polyethylene, polypropylene and acrylic fiber, and having a size of 38 to 300 denier and the density of the fabric is from 25 to 450 yarns per inch in both the warp and the weft.

19. The flame retardant pressure-sensitive adhesive tape as claimed in any one of claims 1 to 18, wherein said flame retardant pressure-sensitive adhesive layer and/or said flame retardant composition layer contain essentially no sulfur and halogen.

20. A flame retardant pressure-sensitive adhesive tape, comprising a cloth substrate having on at least one main surface thereof a flame retardant composition layer and a flame retardant pressure-sensitive adhesive layer in this order; said cloth substrate being impregnated and coated with said flame retardant composition layer; said flame retardant composition layer comprising a natural rubber-base elastomer composed of at least 50% by weight of natural rubber component, aminoalkylalkoxysilane, a tackifier resin and a flame retarder composed of a metal hydroxide and an inorganic flame retardant aid, said natural rubber-base elastomer being vulcanized with aminoalkylalkoxysilane, said aminoalkylalkoxysilane being blended in a ratio of 0.1 to 10 parts by weight per 100 parts by weight of the natural rubber-base elastomer; said flame retardant pressure-sensitive adhesive layer comprising a natural rubber-base elastomer composed of at least 50% by weight of natural rubber component, aminoalkylalkoxysilane, a tackifier resin and a flame retarder composed of a metal hydroxide and an inorganic flame retardant aid, said natural rubber-base elastomer being vulcanized with aminoalkylalkoxysilane, said aminoalkylalkoxysilane being blended in a ratio of 0.1 to 10 parts by weight per 100 parts by weight of the natural rubber-base elastomer; and said tape satisfying the flame retardant level established by UL510FR.

21. The flame retardant pressure-sensitive adhesive tape as claimed in claim 20, wherein in each of said flame retardant composition layer and/or said flame retardant pressure-sensitive adhesive layer, the ratio of said inorganic flame retardant aid blended with said metal hydroxide is from 10 to 50 parts by weight per 100 parts by weight of the metal hydroxide and the total amount of said metal hydroxide and said inorganic flame retardant aid is from more than 150 to 800 parts by weight per 100 parts by weight of the natural rubber-base elastomer in said layer or composition, said flame retardant pressure-sensitive adhesive tape containing essentially no sulfur, antimony, lead, arsenic, phosphorus and halogen.

22. Use of the flame retardant pressure-sensitive adhesive tape claimed in any one of claims 1 to 21 for television parts or a deflection yoke coil.

## Revendications

1. Ruban adhésif ignifuge sensible à la pression, comprenant un substrat en toile et une couche adhésive ignifuge sensible à la pression sur au moins une surface principale dudit substrat, ladite couche adhésive ignifuge sensible à la pression comprenant un élastomère à base de caoutchouc naturel composé d'au moins 50% en poids de composant de caoutchouc naturel, d'aminoalkylalcoxysilane en tant qu'agent de vulcanisation, d'une résine d'adhésivité et d'un ignifugeant inorganique, ledit élastomère en caoutchouc naturel étant vulcanisé avec ledit aminoalkylalcoxysilane, ledit ruban répondant au niveau d'ignifugation établi par UL510FR.

2. Le ruban adhésif ignifuge sensible à la pression tel que revendiqué dans la revendication 1, où ledit ruban adhésif ignifuge sensible à la pression comprend en outre une couche de composition ignifuge sur un côté du substrat de ladite couché adhésive ignifuge sensible à la pression, ladite couche de composition ignifuge comprenant un élastomère à base de caoutchouc naturel d'au moins 50% en poids du composant en caoutchouc naturel, de l'aminoalkylalcoxysilane en tant qu'agent de vulcanisation et un ignifugeant inorganique, ledit élastomère à base de caoutchouc naturel étant vulcanisé avec ledit aminoalkylalcoxysilane, la teneur en ledit ignifugeant dans ladite couche de composition ignifuge étant supérieure à la teneur en ignifugeant dans ladite couche adhésive ignifuge sensible à la pression.

3. Le ruban adhésif ignifuge sensible à la pression tel que revendiqué dans la revendication 1 ou 2, dans lequel ledit substrat en toile est imprégné de ladite couche adhésive ignifuge sensible à la pression ou de ladite couche de composition ignifuge, en vertu de quoi ledit substrat est noyé dans ladite couche adhésive ignifuge sensible à la pression imprégnée ou dans ladite couche de composition ignifuge.

4. Le ruban adhésif ignifuge sensible à la pression tel que revendiqué dans la revendication 1, 2 ou 3, dans lequel ledit substrat a une deuxième surface sur un côté opposé à ladite couche adhésive ignifuge sensible à la pression et ladite deuxième surface dudit substrat est revêtue d'une autre couche de composition ignifuge.

5. Le ruban adhésif ignifuge sensible à la pression tel que revendiqué dans l'une quelconque des revendications 1 à 4, dans lequel ledit ignifugeant comprend un hydroxyde métallique et un auxiliaire ignifuge inorganique.

6. Le ruban adhésif ignifuge sensible à la pression tel que revendiqué dans l'une quelconque des revendications 1 à 5, dans lequel ladite couche de composition ignifuge comprend en outre une résine d'adhésivité et le rapport pondéral de ladite résine d'adhésivité audit élastomère à base de caoutchouc naturel dans ladite couche de composition ignifuge est plus grand que celui de ladite couche adhésive ignifuge sensible à la pression.

7. Le ruban adhésif ignifuge sensible à la pression tel que revendiqué dans l'une quelconque des revendications 1 à 6, dans lequel ledit substrat est une toile inflammable.

8. Le ruban adhésif ignifuge sensible à la pression tel que revendiqué dans l'une quelconque des revendications 1 à 7, dans lequel dans chacune de ladite couche adhésive ignifuge sensible à la pression et/ou de ladite couche de composition ignifuge, ledit aminoalkylalcoxysilane est contenu selon un rapport de 0, 1 à 10 parties en poids par 100 parties en poids de l'élastomère à base de caoutchouc naturel.

9. Le ruban adhésif ignifuge sensible à la pression tel que revendiqué dans l'une quelconque des revendications 1 à 8, dans lequel dans chacune de ladite couche adhésive ignifuge sensible à la pression et/ou de ladite composition ignifuge, ledit ignifugeant inorganique fait plus de 150 à 800 parties en poids par 100 parties en poids de l'élastomère à base de caoutchouc naturel.

10. Le ruban adhésif ignifuge sensible à la pression tel que revendiqué dans l'une quelconque des revendications 1 à 9, dans lequel ladite couche adhésive ignifuge sensible à la pression comprend une résine d'adhésivité en une quantité de 10 à 200 parties en poids par 100 parties en poids dudit élastomère à base de caoutchouc naturel dans ladite couche adhésive sensible à la pression, et ladite couche de composition ignifuge comprend une résine d'adhésivité en une quantité de 10 à 200 parties en poids par 100 parties en poids dudit élastomère à base de caoutchouc naturel dans ladite couche de composition ignifuge, le rapport de mélange de la résine d'adhésivité à l'élastomère contenus dans ladite couche de composition ignifuge étant plus grand que le rapport de mélange de la résine d'adhésivité à l'élastomère contenus dans ladite couche adhésive ignifuge sensible à la pression.

11. Le ruban adhésif ignifuge sensible à la pression tel que revendiqué dans l'une quelconque des revendications 2 à 10, dans lequel ladite couche de composition ignifuge est formée de deux couches de composition ignifuge ou plus, et le rapport de mélange de la résine d'adhésivité à l'élastomère contenus dans ladite couche de composition ignifuge en contact avec ladite couche adhésive ignifuge sensible à la pression est plus grand que le rapport de mélange de la résine d'adhésivité à l'élastomère contenus dans ladite couche adhésive ignifuge sensible à la pression.

12. Le ruban adhésif ignifuge sensible à la pression tel que revendiqué dans l'une quelconque des revendications 1 à 11, dans lequel ledit ignifugeant comprend de l'hydroxyde d'aluminium et/ou de l'hydroxyde de magnésium.

13. Le ruban adhésif ignifuge sensible à la pression tel que revendiqué dans l'une quelconque des revendications 1 à 12, dans lequel ledit ignifugeant comprend au moins un membre sélectionné parmi le groupe consistant en oxyde d'étain, métastannate de zinc, hydroxystannate de zinc et borate de zinc.

14. Le ruban adhésif ignifuge sensible à la pression tel que revendiqué dans l'une quelconque des revendications 1 à 13, dans lequel ledit aminoalkylalcoxysilane est sélectionné parmi le groupe consistant en N-β(aminoéthyl)γ-aminopropylméthyldiméthoxysilane, N-β(aminoéthyl)γ-aminopropylméthyl-diéthoxysilane, N-β(aminoéthyl)γ-aminopropyltriméthoxysilane, N-β(aminoéthyl)γ-aminopropyltriéthoxysilane, γ-aminopropyltriméthoxysilane et γ-aminopropyltriéthoxysilane.

15. Le ruban adhésif ignifuge sensible à la pression tel que revendiqué dans l'une quelconque des revendications 1 à 14, dans lequel ladite couche adhésive ignifuge sensible à la pression et/ou ladite composition ignifuge, comprennent en outre au moins un composant sélectionné parmi le groupe consistant en une matière de charge inorganique, un absorbant d'ultraviolet, un antioxydant et une huile.

16. Le ruban adhésif ignifuge sensible à la pression tel que revendiqué dans l'une quelconque des revendications 1 à 15, dans lequel la quantité de ladite couche de composition ignifuge fait de 3 à 250 g/m².

17. Le ruban adhésif ignifuge sensible à la pression tel que revendiqué dans l'une quelconque des revendications 1 à 16, dans lequel la quantité de ladite couche adhésive ignifuge sensible à la pression fait de 20 à 600 g/m².

18. Le ruban adhésif ignifuge sensible à la pression tel que revendiqué dans l'une quelconque des revendications 1 à 17, dans lequel ladite toile inflammable est un tissu simple ou un tissu mélangé tissé à partir d'un fil simple ou d'un fil mélangé comprenant une fibre sélectionnée parmi le groupe consistant en fibre textile coupée, fibre de coton, de polyester, de polyéthylène, de polypropylène et d'acrylique, et ayant une taille de 38 à 300 deniers et la densité du tissu va de 25 à 450 fils par pouce dans la chaîne et dans la trame.

19. Le ruban adhésif ignifuge sensible à la pression tel que revendiqué dans l'une quelconque des revendications 1 à 18, dans lequel ladite couche adhésive ignifuge sensible à la pression et/ou ladite couche de composition ignifuge ne contiennent essentiellement pas de soufre ni d'halogène.

20. Ruban adhésif ignifuge sensible à la pression comprenant un substrat en toile ayant, sur une surface au moins de celui-ci, une couche de composition ignifuge et une couche adhésive ignifuge sensible à la pression, dans cet ordre; ledit substrat en toile étant imprégné et revêtu de ladite couche de composition ignifuge; ladite couche de composition ignifuge comprenant un élastomère à base de caoutchouc naturel composé d'au moins 50% en poids d'un composant de caoutchouc naturel, d'aminoalkylalcoxysilane, d'une résine d'adhésivité et d'un ignifugeant composé d'un hydroxyde métallique et d'un auxiliaire ignifuge inorganique, ledit élastomère à base de caoutchouc naturel étant vulcanisé avec l'aminoalkylalcoxysilane, ledit aminoalkylalcoxysilane étant mélangé selon un rapport de 0, 1 à 10 parties en poids par 100 parties en poids de l'élastomère à base de caoutchouc naturel; ladite couche adhésive ignifuge sensible à la pression comprenant un élastomère à base de caoutchouc naturel composé d'au moins 50% en poids de composant de caoutchouc naturel, d'aminoalkylalcoxysilane, d'une résine d'adhésivité et d'un ignifugeant composé d'un hydroxyde métallique et d'un auxiliaire ignifuge inorganique, ledit élastomère à base de caoutchouc naturel étant vulcanisé avec l'aminoalkylalcoxysilane, ledit aminoalkylalcoxysilane étant mélangé selon un rapport de 0,1 à 10 parties en poids par 100 parties en poids de l'élastomère à base de caoutchouc naturel; et ledit ruban répondant au niveau d'ignifugation établi par UL5 10FR.

21. Le ruban adhésif ignifuge sensible à la pression tel que revendiqué dans la revendication 20, dans lequel dans chacune de ladite couche de composition ignifuge et/ou de ladite couche adhésive ignifuge sensible à la pression, le rapport dudit auxiliaire ignifuge inorganique mélangé avec ledit hydroxyde métallique, est de 10 à 50 parties en poids par 100 parties en poids de l'hydroxyde métallique et la quantité totale dudit hydroxyde métallique et dudit auxiliaire ignifuge inorganique, fait plus de 150 à 800 parties en poids par 100 parties en poids de l'élastomère à base de caoutchouc naturel dans ladite couche ou composition, ledit ruban adhésif ignifuge sensible à la pression ne contenant essentiellement pas de soufre, d'antimoine, de plomb, d'arsenic, de phosphore ni d'halogène.

22. Utilisation du ruban adhésif ignifuge sensible à la pression revendiqué dans l'une quelconque des revendications 1 à 21, pour des pièces de télévision ou une bobine de collier de déviation.

## Patentansprüche

1. Flammfestes druckempfindliches Klebeband, das ein Stoffsubstrat und auf mindestens einer Hauptfläche des Substrats eine flammfeste druckempfindliche Haftschicht umfasst, die ein auf einem Naturkautschuk basierendes Elastomer umfasst, das aus mindestens 50 Gew.-% einer Naturkautschukkomponente, Aminoalkylalkoxysilan als Vulkanisierungsmittel, einem Tackifierharz und einem anorganischen Flammschutzmittel zusammengesetzt ist, wobei das Naturkautschukelastomer mit dem Aminoalkylalkoxysilan vulkanisiert worden ist und das Klebeband die von UL510FR geforderte Flammfestigkeit besitzt.

2. Flammfestes druckempfindliches Klebeband nach Anspruch 1, das weiterhin eine flammfeste zusammengesetzte Schicht auf einer Substratseite der flammfesten druckempfindlichen Haftschicht umfasst, wobei die zusammengesetzte flammfeste Schicht ein auf einem Naturkautschuk basierendes Elastomer umfasst, das aus mindestens 50 Gew.-% einer Naturkautschukkomponente, Aminoalkylalkoxysilan als Vulkanisierungsmittel und einem anorganischen Flammschutzmittel zusammengesetzt ist, das auf einem Naturkautschuk basierende Elastomer mit dem Aminoalkylalkoxysilan vulkanisiert worden ist und der Gehalt an dem Flammschutzmittel in der zusammengesetzten flammfesten Schicht größer als der Gehalt dieses Flammschutzmittels in der flammfesten druckempfindlichen Haftschicht ist.

3. Flammfestes druckempfindliches Klebeband nach Anspruch 1 oder 2, dessen Stoffsubstrat mit der flammfesten druckempfindlichen Haftschicht oder der zusammengesetzten flammfesten Schicht imprägniert ist, wodurch das Substrat von der imprägnierenden flammfesten druckempfindlichen Haftschicht oder zusammengesetzten flammfesten Schicht geschützt wird.

4. Flammfestes druckempfindliches Klebeband nach Anspruch 1, 2 oder 3, dessen Substrat eine zweite Fläche auf der der flammfesten druckempfindlichen Haftschicht gegenüberliegenden Seite besitzt und die zweite Fläche des Substrats mit einer weiteren zusammengesetzten flammfesten Schicht überzogen ist.

5. Flammfestes druckempfindliches Klebeband nach einem der Ansprüche 1 bis 4, in welchem das Flammschutzmittel ein Metallhydroxid und ein anorganisches Flammschutzhilfsmittel umfasst.

6. Flammfestes druckempfindliches Klebeband nach einem der Ansprüche 1 bis 5, dessen zusammengesetzte flammfeste Schicht ferner ein Tackifierharz und ein Gewichtsverhältnis von Tackifierharz zu dem auf einem Naturkautschuk basierenden Elastomer in der zusammengesetzten flammfesten Schicht, das größer als dasjenige der flammfesten druckempfindlichen Haftschicht ist, umfasst.

7. Flammfestes druckempfindliches Klebeband nach einem der Ansprüche 1 bis 6, dessen Substrat ein nicht entflammbarer Stoff ist.

8. Flammfestes druckempfindliches Klebeband nach einem der Ansprüche 1 bis 7, worin in jeder von flammfester druckempfindlicher Haftschicht und/oder zusammengesetzter flammfester Schicht das Aminoalkylalkoxysilan mit einem Anteil von 0,1 bis 10 Gew.-Tl. auf 100 Gew.-Tl. des auf einem Naturkautschuk basierenden Elastomers enthalten ist.

9. Flammfestes druckempfindliches Klebeband nach einem der Ansprüche 1 bis 8, worin in jeder von flammfester druckempfindlicher Haftschicht und/oder flammfester Zusammensetzung das anorganische Flammschutzmittel mit mehr als 150 bis 800 Gew.-Tl. auf 100 Gew.-Tl. des auf einem Naturkautschuk basierenden Elastomers vorliegt.

10. Flammfestes druckempfindliches Klebeband nach einem der Ansprüche 1 bis 9, worin die flammfeste druckempfindliche Haftschicht ein Tackifierharz mit einem Anteil von 10 bis 200 Gew.-Tl. auf 100 Gew.-Tl. des auf einem Naturkautschuk basierenden Elastomers in der druckempfindlichen Haftschicht enthält und die zusammengesetzte flammfeste Schicht ein Tackifierharz mit einem Anteil von 10 bis 200 Gew.-Tl. auf 100 Gew.-Tl. des auf einem Naturkautschuk basierenden Elastomers in der zusammengesetzten flammfesten Schicht enthält, wobei das Mischungsverhältnis von Tackifierharz zu dem Elastomer, das in der zusammengesetzten flammfesten Schicht enthalten ist, größer als das Mischungsverhältnis des Tackifierharzes zu dem in der flammfesten druckempfindlichen Haftschicht enthaltenen Elastomer ist.

11. Flammfestes druckempfindliches Klebeband nach einem der Ansprüche 2 bis 10, worin die zusammengesetzte flammfeste Schicht aus zwei oder mehreren zusammengesetzten flammfesten Schichten gebildet ist und das Mischungsverhältnis von Tackifierharz zu dem Elastomer, das in der zusammengesetzten flammfesten Schicht enthalten ist, die sich in Berührung mit der flammfesten druckempfindlichen Haftschicht befindet, größer als das Mischungsverhältnis des Tackifierharzes zu dem in der flammfesten druckempfindlichen Haftschicht enthaltenen Elastomer ist.

12. Flammfestes druckempfindliches Klebeband nach einem der Ansprüche 1 bis 11, worin das Flammschutzmittel Aluminiumhydroxid und/oder Mägnesiumhydroxid umfasst.

13. Flammfestes druckempfindliches Klebeband nach einem der Ansprüche 1 bis 12, worin das Flammschutzmittel mindestens einen Bestandteil umfasst, der aus der Gruppe ausgewählt ist, die aus Zinnoxid, Zinkmetastannat, Zinkhydroxystannat und Zinkborat besteht.

14. Flammfestes druckempfindliches Klebeband nach einem der Ansprüche 1 bis 13, worin das Aminoalkylalkoxysilan aus der Gruppe ausgewählt ist, die aus N-β(Aminoethyl)γ-aminopropylmethyldimethoxysilan, N-β(Aminoethyl)γ-aminopropylmethyldiethoxysilan, N-β(Aminoethyl)γ-aminopropyltrimethoxysilan, N-β(Aminoethyl)γ-aminopropyltriethoxysilan, γ-Aminopropyltrimethoxysilan und γ-Aminopropyltriethoxysilan besteht.

15. Flammfestes druckempfindliches Klebeband nach einem der Ansprüche 1 bis 14, worin die flammfeste druckempfindliche Haftschicht und/oder die flammfeste Zusammensetzung außerdem mindestens eine Komponente umfasst/umfassen, die aus der Gruppe ausgewählt ist, die aus einem anorganischen Füllstoff, einem Ultraviolettabsorber, einem Antioxidationsmittel und einem Öl besteht.

16. Flammfestes druckempfindliches Klebeband nach einem der Ansprüche 1 bis 15, worin das Flächengewicht der zusammengesetzten flammfesten Schicht 3 bis 250 g/m² beträgt.

17. Flammfestes druckempfindliches Klebeband nach einem der Ansprüche 1 bis 16, worin das Flächengewicht der flammfesten druckempfindlichen Haftschicht 20 bis 600 g/m² beträgt.

18. Flammfestes druckempfindliches Klebeband nach einem der Ansprüche 1 bis 17, worin der nicht entflammbare Stoff ein einfaches Textilerzeugnis oder ein Mischgewebe aus Einfach- oder Mischgarn ist, das eine Faser umfasst, die aus der Gruppe ausgewählt ist, die aus Stapel-, Baumwoll-, Polyester-, Polyethylen-, Polypropylen- und Acrylfasern besteht, und eine Feinheit von 38 bis 300 Denier hat, wobei die Dichte des Textilerzeugnisses 25 bis 450 Garne pro Zoll sowohl in Ketten- als auch in Schussrichtung beträgt.

19. Flammfestes druckempfindliches Klebeband nach einem der Ansprüche 1 bis 18, dessen flammfeste druckempfindliche Haftschicht und/oder zusammengesetzte flammfeste Schicht im Wesentlichen kein Schwefel und Halogen enthält.

20. Flammfestes druckempfindliches Klebeband, das ein Stoffsubstrat mit auf mindestens einer Hauptfläche einer zusammengesetzten flammfesten Schicht und einer flammfesten druckempfindlichen Haftschicht in dieser Reihenfolge umfasst, wobei das Stoffsubstrat mit der zusammengesetzten flammfesten Schicht imprägniert und beschichtet ist, die zusammengesetzte flammfeste Schicht ein auf einem Naturkautschuk basierendes Elastomer umfasst, das aus mindestens 50 Gew.-% einer Naturkautschukkomponente, Aminoalkylalkoxysilan, einem Tackifierharz und einem Flammschutzmittel zusammengesetzt ist, das aus einem Metallhydroxid und einem anorganischen Flammschutzhilfsmittel zusammengesetzt ist, das auf einem Naturkautschuk basierende Elastomer mit Aminoalkylalkoxysilan vulkanisiert ist, das mit einem Anteil von 0,1 bis 10 Gew.-Tl. auf 100 Gew.-Tl. des auf einem Naturkautschuk basierenden Elastomers zugemischt ist, die flammfeste druckempfindliche Haftschicht ein auf einem Naturkautschuk basierendes Elastomer umfasst, das aus mindestens 50 Gew.-% einer Naturkautschukkomponente, Aminoalkylalkoxysilan, einem Tackifierharz und einem Flammschutzmittel zusammengesetzt ist, das aus einem Metallhydroxid und einem anorganischen Flammschutzhilfsmittel zusammengesetzt ist, das auf einem Naturkautschuk basierende Elastomer mit Aminoalkylalkoxysilan vulkanisiert ist, das mit einem Verhältnis von 0,1 bis 10 Gew.-Tl. auf 100 Gew.-Tl. des auf einem Naturkautschuk basierenden Elastomers zugemischt ist, und dieses Klebeband die von UL510FR geforderte Flammfestigkeit besitzt.

21. Flammfestes druckempfindliches Klebeband nach Anspruch 20, worin in jeder von zusammengesetzter flammfester Schicht und/oder flammfester druckempfindlicher Haftschicht der Anteil des anorganischen Flammschutzhilfsmittels, das mit dem Metallhydroxid vermischt ist, 10 bis 50 Gew.-Tl. auf 100 Gew.-Tl. Metallhydroxid und der gesamte Anteil an dem Metallhydroxid und dem anorganischen Flammschutzhilfsmittel mehr als 150 bis 800 Gew.-Tl. auf 100 Gew.-Tl. des auf einem Naturkautschuk basierenden Elastomers in der Schicht oder Zusammensetzung beträgt, wobei das flammfeste druckempfindliche Klebeband im Wesentlichen kein Schwefel, Antimon, Blei, Arsen, Phosphor und Halogen enthält.

22. Verwendung des flammfesten druckempfindlichen Klebebandes nach einem der Ansprüche 1 bis 21 für Fernseherbauteile oder ein Ablenkspulenjoch.
